Europäisches Patentamt

European Patent Office

Office européen des brevets

(11) Numéro de publication: **0 401 447**

**A1**

## (12) DEMANDE DE BREVET EUROPEEN

(21) Numéro de dépôt: 89401553.6

(22) Date de dépôt: 06.06.89

(51) Int. Cl.⁵: **G01M 3/32**

(43) Date de publication de la demande:
12.12.90 Bulletin 90/50

(84) Etats contractants désignés:
**BE CH DE GB IT LI**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Delmont, Didier 3 Square des Troênes F-91070 Bondoufle(FR)**
Inventeur: **Magris, Yvon 59 rue A. Pajeaud F-91160 Antony(FR)**

(74) Mandataire: **Mongrédien, André et al c/o BREVATOME 25, rue de Ponthieu F-75008 Paris(FR)**

(54) **Procédé et système de contrôle de l'étanchéité d'une enceinte.**

(57) Selon l'invention, on détermine l'évolution temporelle de la différence entre la pression interne de l'enceinte (2) et une pression de référence, et on compare cette évolution à celle d'une pression différentielle théorique correspondant à un taux de fuite prédéterminé de l'enceinte, de façon à pouvoir comparer le taux de fuite réel de l'enceinte à ce taux de fuite prédéterminé. Avant la comparaison, une correction de la différence de pression en fonction de la pression régnant à l'extérieur de l'enceinte, et de la température interne à celle-ci, est effectuée.

Application au contrôle de l'étanchéité d'une "boîte à gants".

## PROCEDE ET SYSTEME DE CONTROLE DE L'ETANCHEITE D'UNE ENCEINTE

La présente invention concerne un procédé et un système de contrôle de l'étanchéité d'une enceinte. Elle s'applique notamment au contrôle de l'étanchéité d'une enceinte de confinement destinée à être maintenue en dépression ou en surpression, cette enceinte étant par exemple du genre de celles qui sont connues sous le nom de "boîte à gants".

On connaît déjà différents systèmes de contrôle de l'étanchéité d'une enceinte. Certains d'entre eux utilisent des manomètres à eau et sont de ce fait peu précis tandis que d'autres utilisent un balayage de l'enceinte par un gaz neutre, ce qui peut poser des problèmes lorsque l'enceinte est en service.

On connaît également, par un article de Yu. N. ZHIGULIN publié dans la revue Izmeritel'naya Tekhnika, n°8, pp. 62 à 64, Août 1975, dont la traduction anglaise est éditée par Plenum Publishing Corporation, un système de contrôle de l'étanchéité d'une enceinte. Cependant, ce système connu nécessite l'établissement d'une forte différence de pression, au moins égale à $0,5\times10^5$ Pa, entre l'intérieur et l'extérieur de l'enceinte à contrôler et, de ce fait, n'est utilisable qu'avec des enceintes capables de résister à de fortes différences de pression.

La présente invention a pour but de remédier aux inconvénients précédents.

Elle a tout d'abord pour objet un procédé de contrôle de l'étanchéité d'une enceinte, caractérisé en ce qu'il comprend les étapes suivantes :
- on détermine l'évolution temporelle d'une pression différentielle interne égale à la différence entre la pression interne de l'enceinte et une pression de référence, et
- on effectue une comparaison de cette évolution de la pression différentielle interne à l'évolution temporelle d'une pression différentielle théorique correspondant à un taux de fuite prédéterminé de l'enceinte, de façon à pouvoir comparer le taux de fuite réel de l'enceinte à ce taux de fuite prédéterminé, et en ce qu'on effectue une correction de la pression différentielle interne en fonction de l'évolution temporelle de la pression régnant à l'extérieur de l'enceinte et en fonction de l'évolution temporelle de la température interne de l'enceinte, avant que la comparaison ne soit effectuée.

L'invention a également pour objet un système de contrôle de l'étanchéité d'une enceinte, caractérisé en ce qu'il comprend :
- des premiers moyens de détermination, prévus pour déterminer l'évolution temporelle d'une pression différentielle interne égale à la différence entre la pression interne de l'enceinte et une pression de référence, et
- des moyens de comparaison permettant d'effectuer une comparaison de cette évolution de la pression différentielle interne à l'évolution temporelle d'une pression différentielle théorique correspondant à un taux de fuite prédéterminé de l'enceinte, de façon à pouvoir comparer le taux de fuite réel de l'enceinte à ce taux de fuite prédéterminé,
et en ce que les moyens de comparaison sont prévus pour effectuer une correction de la pression différentielle interne en fonction de l'évolution temporelle de la pression régnant à l'extérieur de l'enceinte et fonction de l'évolution temporelle de la température interne de l'enceinte, avant que la comparaison ne soit effectuée.

La présente invention n'utilise donc aucun balayage par un gaz neutre pour contrôler l'enceinte et conduit à des mesures précises car elle fait intervenir des mesures de pression différentielle.

La présente invention est en outre avantageuse du fait qu'elle permet de contrôler une enceinte mise en dépression ou en surpression, même lorsque cette enceinte est en service et sans avoir à transformer de manière notable ladite enceinte.

De plus, dans la présente invention, la correction de température interne et la correction de pression externe sont essentielles et ont la même importance, et l'association de ces corrections permet le contrôle de l'étanchéité de l'enceinte avec une faible différence de pression entre l'intérieur et l'extérieur de cette enceinte et, de ce fait, l'invention est utilisable avec des enceintes fragiles, dont les parois ne supportent que de faibles différences de pression, ne dépassant pas $10^3$ Pa.

On notera d'ailleurs que le système décrit dans l'article mentionné plus haut ne fait intervenir aucune correction de pression externe ou de température interne.

On rappelle que le débit de "fuite" d'une enceinte mise en surpression (ou en dépression) au moyen d'un gaz qui peut être de l'air, est égal au volume de ce gaz quittant l'enceinte (ou y pénétrant) par unité de temps.

On définit également le taux de fuite de l'enceinte comme étant le rapport du débit de fuite de l'enceinte au volume de celle-ci (exprimé avec la même unité que le volume de gaz considéré plus haut).

Dans un mode de réalisation préféré, le système objet de l'invention comprend en outre des second moyens de détermination prévus pour déterminer l'évolution temporelle d'une pression différentielle externe, égale à la différence entre la pression régnant à l'extérieur de l'enceinte et ladite pression de référence et les moyens de comparaison sont prévus pour corriger la pression différentielle interne en fonction de l'évolution temporelle de la pression différentielle externe.

Selon un mode de réalisation particulier du système objet de l'invention, les premiers moyens de détermination comprennent :

- une enceinte de référence étanche, qui communique avec l'environnement de l'enceinte à contrôler et peut être isolée de cet environnement, et
- un premier capteur de pression différentielle communiquant avec l'enceinte de référence et l'enceinte à contrôler,

les seconds moyens de détermination comprennent un second capteur de pression différentielle qui communique avec l'enceinte de référence et l'environnement de l'enceinte à contrôler, le système comprend en outre un capteur de température placé à l'intérieur de l'enceinte à contrôler, les moyens de comparaison comprennent des moyens électroniques de traitement reliés, par l'intermédiaire de premiers moyens de mise en forme, au premier capteur et prévus pour permettre la comparaison en fonction d'informations reçues de ce premier capteur, et les moyens électroniques de traitement sont en outre reliés, par l'intermédiaire de seconds moyens de mise en forme, au second capteur et, par l'intermédiaire de troisièmes moyens de mise en forme, au capteur de température, et prévus pour effectuer la correction de pression différentielle interne en fonction d'informations reçues du second capteur et d'informations reçues du capteur de température.

L'utilisation d'une unique enceinte de référence est avantageuse : si l'on utilisait une première et une seconde enceintes de référence respectivement associées au premier et au second capteurs, il risquerait d'y avoir initialement une différence de température entre cette première et cette seconde enceintes, ce qui imposerait une attente de plusieurs heures pour que les première et seconde enceintes soient en équilibre thermique, afin d'éviter une "dérive" en température du système. L'utilisation d'une seule enceinte de référence remédie à cet inconvénient, d'où un gain de temps appréciable, une simplification et donc un coût réduit du système.

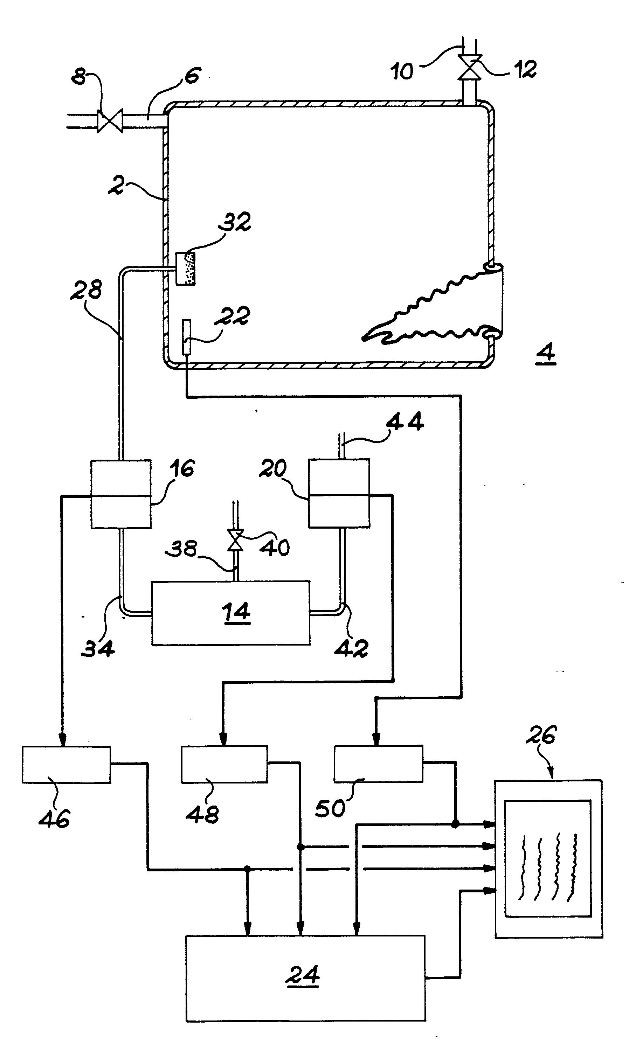

La présente invention sera mieux comprise à la lecture de la description qui suit, d'un exemple de réalisation donné à titre nullement limitatif et purement indicatif, en référence à la figure annexée qui est une vue schématique d'un mode de réalisation particulier du système object de l'invention.

- Le système représenté schématiquement sur cette figure est destiné à contrôler l'étanchéité d'une enceinte 2, par exemple du genre de celles que sont connues sous le nom de "boîte à gants". Le milieu environnant l'enceinte, par exemple l'air d'un local dans lequel se trouve cette enceinte, porte la référence 4 sur la figure.

L'enceinte 2 est munie de moyens de ventilation comprenant une canalisation 6 permettant (grâce à une pompe non représentée) l'entrée d'un gaz tel que l'air dans l'enceinte et munie d'une vanne d'isolation 8 ainsi qu'une autre canalisation 10 destinée à l'évacuation de ce gaz (grâce à une autre pompe non représentée) et également munie d'une vanne d'isolation 12.

Le système représenté sur la figure comprend :

- une enceinte de référence parfaitement étanche 14,
- un premier capteur de pression différentielle 16,
- un second capteur de pression différentielle 20,
- un capteur de température 22 placé à l'intérieur de l'enceinte 2,
- des premiers 46, seconds 48 et troisièmes 50 moyens de mise en forme.
- des moyens électroniques de traitement 24 sur lesquels des précisions seront données par la suite, et
- des moyens de visualisation 26.

Le premier capteur de pression différentielle 16 est relié à l'intérieur de l'enceinte 2 à contrôler par une canalisation 28 dont l'extrémité débouchant dans l'enceinte 2 est pourvue d'un filtre 32 et à l'intérieur de l'enceinte de référence 14 par une canalisation 34.

Le filtre 32 est destiné à empêcher la pénétration d'aérosols susceptibles d'être contenus dans l'enceinte 2, dans la canalisation 28.

Par ailleurs, l'enceinte de référence 14 communique avec l'extérieur de l'enceinte à contrôler 2 par l'intermédiare d'une canalisation 38 qui est munie d'une vanne d'isolation 40 et dont une extrémité débouche à l'intérieur de l'enceinte 14 tandis que l'autre extrémité est ouverte.

Le second capteur de pression différentielle 20 communique avec l'intérieur de l'enceinte 14 par une canalisation 42 et avec l'extérieur de l'enceinte à contrôler 2 par une canalisation 44 ouverte sur l'extérieur de cette enceinte 2.

Les sorties des capteurs 16, 20 et 22 sont respectivement reliées aux entrées des moyens 46. 48 et 50 prévus pour mettre en forme et afficher les résultats des mesures faites par ces capteurs Les sorties des moyens 46, 48 et 50 sont reliées aux moyens électroniques 24 de sorte que les résultats des mesures sont transmis à ces moyens électroniques 24 dans lesquels lesdits résultats sont d'abord numérisés (au moyen de convertisseurs analogique-numérique non représentés) puis traités, comme on le verra par la suite, dans un micro-ordinateur non représenté, faisant partie des moyens électroniques 24.

Les sorties des moyens 46, 48 et 50 sont en outre reliées aux moyens de visualisation 26 qui consistent par exemple en un enregistreur à quatre voies. La sortie des moyens électroniques 24 est également reliée à cet enregistreur.

Le contrôle de l'étanchéité de l'enceinte est effectué de la façon suivante : on suppose que l'enceinte 2 n'est pas en service et se trouve à la pression atmosphérique. On lui raccorde les canalisations 6, 10 et 28, cette dernière étant par exemple du type conduit flexible et raccordée au capteur 16, et on munit l'enceinte 2 de la sonde 22 reliée aux moyens de mise en forme 50. On met sous tension les appareils électriques du système, on ouvre la vanne 40 et on laisse le système se stabiliser pendant une quinzaine de minutes par exemple. On fait les réglages de zéro nécessaires (moyens d'affichage des résultats, enregistreur), on ferme la vanne 40, on met l'enceinte 2 en surpression (ou en dépression) à l'aide des moyens de ventilation dont elle est munie, moyens dont elle est ensuite isolée par fermeture des vannes 8 et 12, et on laisse le système se stabiliser pendant une quinzaine de minutes par exemple.

A titre purement indicatif et nullement limitatif, la vitesse de défilement de l'enregistreur est de l'ordre de 20 à 40 mm/h.

Si l'enceinte 2 est déjà en service et donc déjà en dépression ou en surpression, raccordée à la canalisation 28 (elle-même raccordée au capteur 16) et munie de la sonde 22 raccordée aux moyens 50, on met les appareils électriques du système sous tension, on ouvre la vanne 40, on laisse le système se stabiliser pendant une quinzaine de minutes par exemple -ou moins si le système a déjà fonctionné auparavant- on fait les réglages de zéro nécessaires, on ferme la vanne 40 et on laisse le système se stabiliser pendant une quinzaine de minutes par exemple. La pression régnant à l'intérieur de l'enceinte 14 (pression atmosphérique) sert de pression de référence pour la mesure de la pression différentielle interne de l'enceinte 2, effectuée au moyen du premier capteur 16 et également de pression de référence pour la mesure différentielle de la pression régnant à l'extérieur de l'enceinte 2 à contrôler.

Le premier capteur 16, de préférence à haute sensibilité, mesure les variations, en fonction du temps, de la différence entre la pression interne de l'enceinte à contrôler 2 et la pression interne de l'enceinte de référence 14. De même, le capteur 20, de préférence à haute sensibilité, mesure les variations, en fonction du temps, de la différence entre la pression régnant à l'extérieur de l'enceinte à contrôler 2 et la pression interne de l'enceinte de référence 14.

Le capteur 22, par exemple constitué par une sonde au platine, mesure quant à lui les variations, en fonction du temps, de la température interne de l'enceinte 2.

Les résultats des mesures faites par les capteurs 16, 20 et 22 sont respectivement mis en forme et affichés par les moyens 46, 48 et 50 et les variations temporelles correspondantes sont tracées par l'enregistreur 26.

Ces variations sont également introduites dans le micro-ordinateur qui, en permanence,
- calcule une pression différentielle théorique égale à la différence entre la pression interne de l'enceinte à contrôler et la pression interne de l'enceinte 14, pour un taux de fuite prédéterminé, par exemple égal à $5.10^{-4}$ heure$^{-1}$ (Norme NFX 62200),
- corrige la pression différentielle interne de l'enceinte 2 en fonction des variations temporelles de la pression différentielle externe mesurée par le second capteur 20 et des variations temporelles de la température interne de l'enceinte 2, et
- calcule la différence entre la pression différentielle théorique et la pression différentielle interne de l'enceinte 2, mesurée par le capteur 16.

Le résultat de ce dernier calcul est également tracé par l'enregistreur 26, en fonction du temps.

Il est ainsi possible de comparer le taux de fuite réel de l'enceinte 2 à contrôler au taux de fuite prédéterminé : en supposant cette enceinte 2 en dépression, si la différence algébrique entre la pression différentielle théorique et la pression différentielle mesurée est une fonction croissante du temps, le taux de fuite réel est inférieur au taux de fuite prédéterminé et si, au contraire, cette différence est une fonction décroissante du temps, le taux de fuite réel est supérieur au taux de fuite prédéterminé.

On peut ainsi juger que l'enceinte 2 est, ou au contraire n'est pas, acceptable, en fonction du résultat de cette comparaison.

A titre purement indicatif et nullement limitatif, les capteurs de pression différentielle ont les caractéristiques suivantes :
- étendue de mesure : 10 cm CE (Colonne d'eau)
- résolution : 0,01% pleine échelle
- précision : 0,15% de la lecture
- constante de temps : 4,5 ms
et le capteur de température est une sonde au platine, de résistance 100 ohms à 0°C, ayant 0,1°C de résolution.

Le calcul de la pression différentielle théorique, correspondant à un taux de fuite prédéterminé Tfp, donc à un coefficient de fuite prédéterminé Kfp, est effectué de la façon suivante par le micro-ordinateur (ou de manière manuelle à partir des tracés de l'enregistreur 26) :

On procède par itération à partir d'un instant to pris comme origine (to = 0). A cet instant, la pression interne, la température et le volume de l'enceinte 2 sont respectivement notés PBO, TBO et VBO, et la pression et la température du local dans lequel se trouve l'enceinte 2 sont respectivement notées PC0 et TC0.

A l'instant t (correspondant par exemple à m itérations de pas dt), la pression interne, la température et le volume de l'enceinte 2 sont respectivement notés PB, TB ET VB, et la pression du local est notée PC.

On désigne par DP la pression différentielle mesurée entre la pression interne PB à l'instant t de l'enceinte 2 et la pression interne initiale PBO, soit :

DP = PB - PBO

DP étant nulle à l'instant t = 0.

A l'instant t1 égal à t + dt, la pression interne, la température et le volume de l'enceinte 2 sont respectivement notés PB1, TB1 et VB1 et la pression du local est notée PC1.

Par définition, le taux de fuite Tf d'une enceinte est relié au débit de fuite Df de celle-ci par les égalités suivantes :

Df = Kf(PCO-Pu) = Tf.VBu

Pu étant la pression interne d'utilisation (fixée) de l'enceinte, Kf le coefficient de fuite de l'enceinte et VBu le volume de cette enceinte à la pression Pu.

On désigne par PBT la pression théorique interne de l'enceinte 2, à l'instant t, et par DPT la pression différentielle théorique à cet instant. En supposant par exemple l'enceinte 2 en dépression, on a :

DPT = PBT - PBO

la quantité DPT étant nulle à l'instant 0.

En désignant par dV le volume introduit dans l'enceinte 2 entre les instants t et t1 (supposés très proches l'un de l'autre) on a :

$$dV = Kfp \, (PC - PB) \, (t - t1) \qquad (1)$$

Le nombre de moles d'air correspondantes, prises dans les conditions de l'enceinte 2 est égal à :

$$dN = PB.dV.R^{-1} \qquad (2)$$

formule dans laquelle R représente la constante des gaz parfaits.

Le nombre de moles d'air à l'instant t dans l'enceinte est égal à :

$$N = PB.VB.(R)^{-1}.(TB)^{-1} \qquad (3)$$

Le nombre de moles d'air à l'instant t1 dans l'enceinte est égal à :

$$N1 = N + dN \qquad (4)$$

et la pression théorique interne de l'enceinte à l'instant t1 est égale à :

$$PBT1 = N1.R.TB1.(VB1)^{-1} \qquad (5)$$

quantité calculable à l'aide des formules (1) à (4), dans le cas d'une enceinte à parois rigides, pour laquelle VB est contant au cours du temps (VB1 = VB = VB0).

Dans le cas d'une enceinte du type boîte à gants par exemple, dont les parois ne sont pas rigoureusement rigides, on tient compte de la variation de volume de l'enceinte et l'on calcule VB1 de la façon indiquée par la suite.

La pression différentielle théorique de l'enceinte à l'instant t1 est alors :

DPT1 = PBT1 - PB0

quantité que l'on compare ensuite à la pression différentielle interne mesurée DP1, égale à PB1-PB0, à l'instant t1.

Le calcul du volume de l'enceinte à parois non rigides, par exemple en plexiglass, est effectué de la façon suivante :

On assimile, de manière satisfaisante, chaque paroi p déformée (p variant entre 1 et le nombre n de parois) à une calotte sphérique, intersection d'une sphère de rayon r par un plan situé à une distance $h_p$-r du centre de la sphère, $h_p$ représentant ainsi la flèche de courbure de la paroi considérée, à l'instant t.

La quantité $h_p$ est une fonction de PC-PB. Cette fonction est déterminable, connaissant l'enceinte considérée.

On désigne par D le rayon du cercle de base de la calotte sphérique et l'on considère que D est égal à la diagonale $D'_p$ de la paroi p.

On a alors :

$$2h_p.R = D_p^2 = h_p^2$$

Le volume $VP_p$ engendré par la déformation de la paroi p à l'instant t est tel que :

$$VP_p \, (pi/3)h_p^2 \, (3R-h \,)$$

ou

$$VP_p \, (pi/6)h_p(3D_p^2 + H_p^2 \,)$$

Dans ces égalités, pi est le nombre bien connu qui vaut sensiblement 3,141592.

En désignant par VBG le volume géométrique global de l'enceinte sans déformation, on a, à l'instant t :

$$VB = VBG-(VP_1 + VP_2 + ... + VP_p + VP_p + ... + VP_n)$$

en cas de surpression de l'enceinte (la somme $VP_1 + ... + VP_n$ étant au contraire à ajouter en cas de dépression de l'enceinte).

La valeur VB1 alors calculée à l'instant t1 est ensuite introduite dans la formule (5).

## Revendications

1. Procédé de contrôle de l'étanchéité d'une enceinte (2), caractérisé en ce qu'il comprend les étapes suivantes :
- on détermine l'évolution temporelle d'une pression différentielle interne égale à la différence entre la pression interne de l'enceinte (2) et une pression de référence, et
- on effectue une comparaison de cette évolution de la pression différentielle interne à l'évolution temporelle d'une pression différentielle théorique correspondant à un taux de fuite prédéterminé de l'enceinte, de façon à pouvoir comparer le taux de fuite réel de l'enceinte à ce taux de fuite prédéterminé, et en ce qu'on effectue une correction de la pression différentielle interne en fonction de l'évolution temporelle de la pression régnant à l'extérieur (4) de l'enceinte (2) et en fonction de l'évolution temporelle de la température interne de l'enceinte (2), avant que la comparaison ne soit effectuée.

2. Système de contrôle de l'étanchéité d'une enceinte (2), caractérisé en ce qu'il comprend :
- des premiers moyens de détermination (14, 16), prévus pour déterminer l'évolution temporelle d'une pression différentielle interne égale à la différence entre la pression interne de l'enceinte et une pression de référence, et
- des moyens (24, 26) de comparaison permettant d'effectuer une comparaison de cette évolution de la pression différentielle interne à l'évolution temporelle d'une pression différentielle théorique correspondant à un taux de fuite prédéterminé de l'enceinte, de façon à pouvoir comparer le taux de fuite réel de l'enceinte à ce taux de fuite prédéterminé,

et en ce que les moyens de comparaison (24, 226) sont prévus pour effectuer une correction de la pression différentielle interne en fonction de l'évolution temporelle de la pression régnant à l'extérieur (4) de l'enceinte (2) et fonction de l'évolution temporelle de la température interne de l'enceinte (2), avant que la comparaison ne soit effectuée.

3. Système selon la revendication 2, caractérisé en ce qu'il comprend en outre des seconds moyens de détermination (14, 20), prévus pour déterminer l'évolution temporelle d'une pression différentielle externe, égale à la différence entre la pression régnant à l'extérieur (4) de l'enceinte (2) et ladite pression de référence et en ce que les moyens de comparaison (24, 26) sont prévus pour corriger la pression différentielle interne en fonction de l'évolution temporelle de la pression différentielle externe.

4. Système selon la revendication 3, caractérisé en ce que les premiers moyens de détermination comprennent :
- une enceinte de référence étanche (14), qui communique avec l'environnement (4) de l'enceinte à contrôler (2) et peut être isolée de cet environnement (4), et
- un premier capteur de pression différentielle (16) communiquant avec l'enceinte de référence et l'enceinte à contrôler (2),
en ce que les seconds moyens de détermination comprennent un second capteur de pression différentielle (20) qui communique avec l'enceinte de référence et l'environnement (4) de l'enceinte à contrôler, en ce que le système comprend en outre un capteur de température (22) placé à l'intérieur de l'enceinte (2) à contrôler, en ce que les moyens de comparaison comprennent des moyens électroniques de traitement (24) reliés, par l'intermédiaire de premiers moyens de mise en forme (46), au premier capteur (16) et prévus pour permettre la comparaison en fonction d'informations reçues de ce premier capteur et en ce que les moyens électroniques de traitement (24) sont en outre reliés, par l'intermédiaire de seconds moyens de mise en forme (48), au second capteur et, par l'intermédiaire de troisièmes moyens de mise en forme (50), au capteur de température, et prévus pour effectuer la correction de pression différentielle interne en fonction d'informations reçues du second capteur et d'informations reçues du capteur de température.

5. Système selon l'une quelconque des revendications 2 à 4, caractérisé en ce que l'enceinte (2) à contrôler est une enceinte de confinement à maintenir en dépression ou en surpression.

Office européen des brevets

**RAPPORT DE RECHERCHE EUROPEENNE**

Numero de la demande

EP 89 40 1553

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 523 452 (S. BRAYMAN)<br>* revendications 1-5 *<br>--- | 1 | G 01 M .3/32 |
| Y | US-A-4 686 638 (A. FURUSE)<br>* colonnes 9-14 *<br>--- | 1 | |
| Y | EP-A-0 190 059 (NOVATOME)<br>* revendications 1,5,7,8 *<br>--- | 1 | |
| A | EP-A-0 139 752 (KABUSHIKI KAISHA KOSUMO KEIKI)<br>* revendications 1-8 *<br>--- | 1 | |
| A | US-A-3 956 923 (G.A. YOUNG et al.)<br>* revendications 1-22 *<br>--- | 1-5 | |
| A | PATENT ABSTRACTS OF JAPAN<br>vol. 6, no. 100 (P-121)(978), 9 juin 1982; & JP - A - 57 33337 (KURARAY K.K.) 23.02.1982<br>--- | 1,2 | **DOMAINES TECHNIQUES RECHERCHES (Int. Cl.5)** |
| A | SOVIET JOURNAL OF NONDESTRUCTIVE TESTING<br>vol. 20, no. 6, juin 1984, pages 395-400, New York, USA; E.I. DOGONKINA et al.: "Use of microcomputers in tests of vacuum tightness" * pages 396,397 *<br>----- | 1 | G 01 M 3/00 |

Le présent rapport a été établi pour toutes les revendications

| Lieu de la recherche | Date d'achèvement de la recherche | Examinateur |
|---|---|---|
| BERLIN | 19-12-1989 | DIETRICH A. |